# EUROPEAN PATENT SPECIFICATION

(11) **EP 2 796 353 B1**
(45) Date of publication and mention of the grant of the patent: **24.10.2018**
(21) Application number: 12860191.1
(22) Date of filing: 19.12.2012
(51) Int. Cl.: B62J 99/00, B62J 27/00, B60L 3/00, B60L 11/18, B60L 3/04, B62J 1/12

(54) **SADDLE-TYPE ELECTRIC VEHICLE**
ELEKTRISCHES SATTELFAHRZEUG
VÉHICULE ÉLECTRIQUE DU TYPE À SELLE

(30) Priority: 22.12.2011 JP 2011281193; 27.11.2012 JP 2012258857
(43) Date of publication of application: 29.10.2014
(73) Proprietor: Yamaha Hatsudoki Kabushiki Kaisha, Iwata-shi, Shizuoka 438-8501 (JP)
(72) Inventor: SOUMA Yousuke, Iwata-shi Shizuoka 438-8501 (JP)
(74) Representative: Grünecker Patent- und Rechtsanwälte PartG mbB
(86) International application number: PCT/JP2012/082958
(87) International publication number: WO 2013/094650

(56) References cited:
- WO-A1-2010/038125
- JP-A- H0 731 050
- JP-A- H06 141 407
- JP-A- 2005 347 203
- JP-A- 2007 228 716
- JP-A- 2009 112 111
- JP-A- 2011 063 066
- JP-U- H01 105 301
- US-A- 5 478 249
- US-A1- 2010 073 119

## Description

The present invention relates to a straddle-type electric vehicle.

US 5 478 249 A discloses an electrical connection device comprising two connection elements of which one is mobile, and which are arranged to be capable of mutually coupling and uncoupling by rotation of the mobile element in the other element and to connect or reciprocally separate the opposing contacts with which they are provided. The mobile element is a coupler socket and the other element a connector outlet. The outlet is provided with a protective element which covers the contacts of the outlet when at rest, and which is rotationally mounted therein so as to be capable of being rotationally driven by the coupler socket during coupling. The protective element comprises two flaps which can slide with respect to one another and which are each provided with at least as many openings as there are contacts in the outlet and which are arranged in the same manner. The flaps are positioned with respect to one another when at rest, so that the openings are mutually offset, and means being provided to drive the sliding of the flaps with respect to one another during coupling.

An electric vehicle provided with an electric motor as a power supply source includes a charging receptacle for charging a battery. When charging the battery, a plug provided at an end portion of a cord extending from a charger is connected to the receptacle.

As a connector used in charging the electric vehicle, there is known a connector which includes a lock mechanism, a locking operation detector, and a lock controller (for example, see Patent Document 1). In this connector, the lock mechanism locks and unlocks a charger-side connector and a vehicle-side connector into and from a coupled state, and the locking operation detector detects an operating state of the lock mechanism. Then, the lock controller switches a control switch which opens or closes a charge line from a charging power supply to the battery between an open state and a closed state based on the result of the detection made by the locking operation detector.

In this connector, when the locking operation detector detects that the lock mechanism has been put in a locking state with the vehicle-side connector coupled to the charger-side connector, the control switch provided on the charge line is put in the closed state. Then, electric power is supplied from the charging power supply to the battery via the charge line, whereby an electrical communication is established between the connectors. Here, when a person who does not know that charging is being performed attempts to disconnect the connectors, although the connectors are electrically communicating with each other, the locking operation detector detects that the lock mechanism has been put in an unlocking state. Then, the control switch is put in the open state, whereby the electrical communication between the connectors is interrupted. This can prevent the generation of arc discharge that would occur between contacts of the connectors when the connectors are disconnected, whereby the protection of the contacts is ensured.

[Patent Document 1] Japanese Patent Publication No. 10-262340A

In the configuration described above, however, with a view to preventing the arc discharge by switching the control switch provided on the charge line, an electrical communication interrupting mechanism including the lock mechanism, the locking operation detector and the lock controller is incorporated in a main body of the plug (the charge connector). This calls for the enlargement of the plug. Consequently, it cannot be avoided that the receptacle (the vehicle-side connector) to which the plug which is so enlarged is connected is also enlarged.

A parts installation space is limited on a straddle-type vehicle such as a two-wheeled electric vehicle, compared with a four-wheeled vehicle. This requires that the receptacle is also disposed within the narrow space. Consequently, it is difficult to install a large respectable which is large enough to permit the connection of a large plug like the one described above in a straddle-type electric vehicle.

Consequently, an object of the invention is to provide a straddle-type electric vehicle which enables the installation of a small receptacle and which can ensure the prevention of the generation of arc discharge when a plug is connected to or disconnected from the receptacle.

In order to achieve the above object, according to one aspect of the present invention there is provided a straddle-type electric vehicle according to claim 1.

With the above configuration, it is possible to reliably prevent the generation of arc discharge when a removal operation of the charge plug from the charge receptacle is performed. In addition, the displacement of the lid as a trigger for interrupting or limiting the electrical communication can be realized by a downsized plug. Consequently, it is possible to provide a corresponding downsized charge receptacle in the straddle-type vehicle.

It should be noted that the expression "when the charge plug fitted with the connection port is removed therefrom" used herein means to include an immediately before the charge plug is removed, during the removal operation, and the completion of the removal.

In a case where the contact portion is provided on an inner face of the lid facing the connection port, and the lid is configured to be pivotable relative to the connection port, the lid can be opened or closed by the charged plug so that it is reliably accomplished that the contact portion changes the state that the lid is opened or closed.

The signal changer may be a switch configured to interrupt the signal carried by the signal line when the lid is opened to a predetermined degree or more, or may be a switch configured to interrupt the signal carried by the signal line when the lid is opened less than a predetermined degree. Alternatively, the signal changer is a position sensor configured to change the signal in accordance with a position of the lid opening or closing the connection port.

In a case where the signal line is a communication line connecting the electrical communication controller and a control unit of a charger configured to supply power to the battery, it is not necessary to provide an individual signal line for controlling the interruption of charging. Consequently, the increase of the number of terminals in the charge receptacle can be avoided, whereby contributing to the cost reduction and the improvement of the connection reliability.

The charge receptacle may be configured such that: a dimension in a first direction, which is perpendicular to a connecting-disconnecting direction of the charger plug, is larger than a dimension in a second direction, which is perpendicular to the first direction and the connecting-disconnecting direction; and a plurality of terminals are arrayed in the first direction. In this case, a connection port of the charge receptacle can be formed into a thin-flat shape. Consequently, it is possible to enhance the degree of freedom in disposing the charge receptacle even in the straddle-type vehicle where the parts installation space is relatively limited. Moreover, it is possible to arrange power supply terminals, which is likely generate heat, apart from each other.

### Brief Description of the Drawings

Fig. 1 is a left side view showing a two-wheeled electric vehicle according to an embodiment of the invention.
Fig. 2 is a left side view of the two-wheeled electric vehicle shown in Fig. 1 with some of constituent components removed therefrom.
Fig. 3 is a perspective view showing an accommodation space in a state that a seat of the two-wheeled electric vehicle shown in Fig. 1 is opened.
Fig. 4 is a perspective showing a state that a plug is connected to a receptacle provided in the accommodation space shown in Fig. 3.
Fig. 5 is a perspective view showing the appearance of the receptacle shown in Fig. 4.
Fig. 6 is a perspective view showing the appearance of the plug shown in Fig. 4.
Fig. 7 is a diagram showing a configuration of a charge system in the two-wheeled vehicle shown in Fig. 1.
Fig. 8 is a view schematically showing wirings between a charger and the two-wheeled vehicle shown in Fig. 1.
Fig. 9 is a right side view showing a relationship between an open/close state of the lid of the receptacle shown in Fig. 5 and a lid open/close switch.
Fig. 10 is a right side view showing a relationship between an insertion state of the plug into the receptacle shown in Fig. 5 and the lid open/close switch.
Fig. 11 is a left side view showing a variation example of the two-wheeled vehicle shown in Fig. 1 wherein a location of the receptacle is different.

Referring to the accompanying drawings, the invention will be described in detail below. In the individual drawings for use in the following description, the scales are changed as required so that individual constituent members are illustrated in good sizes for recognition.

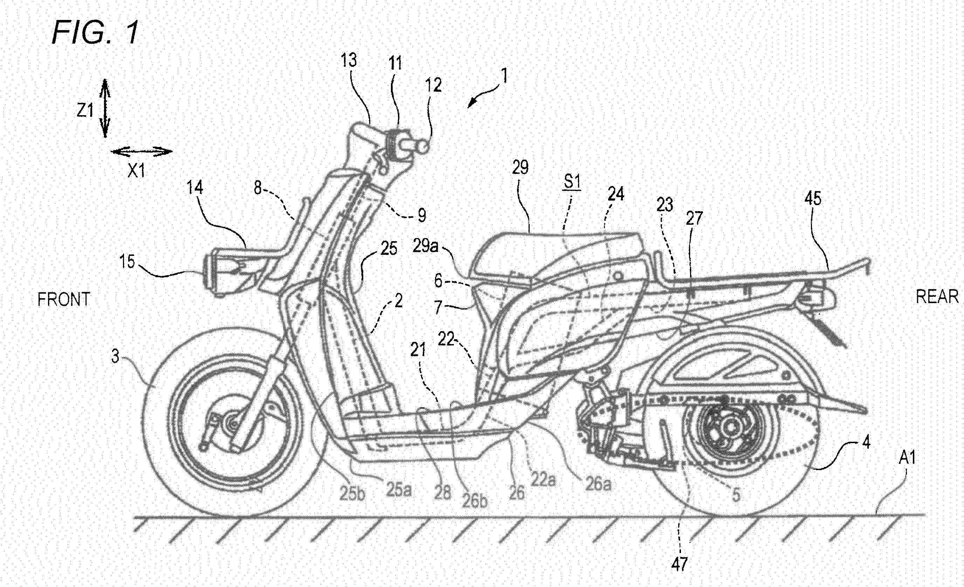

Fig. 1 is a left side view showing a two-wheeled electric vehicle according to an embodiment of the invention. In this embodiment, a two-wheeled electric vehicle 1 which takes the form of a scooter will be described as a straddle-type electric vehicle. The two-wheeled electric vehicle 1 can run with luggage placed at a front portion and a rear portion thereof and is suitable for application to a luggage carrying vehicle.

Directions denoted as front and rear, top and bottom, as well as left and right are based on a standard posture of the two-wheeled electric vehicle 1 which corresponds to a state in which the two-wheeled electric vehicle 1 runs straight ahead on a horizontal plane and the point of view of a rider when the rider faces the front of the vehicle. In addition, the configuration of the two-wheeled electric vehicle 1 will be described based on the two-wheeled electric vehicle 1 in such a state that the vehicle stands erect, a front wheel 3 and a rear wheel 4 are in contact with a road face A1, and the vehicle is in an unloaded state without a rider.

The two-wheeled electric vehicle 1 comprises a body frame 2, the front wheel 3, the rear wheel 4, an electric motor 5, a battery 6, and a body cover 7. In the two-wheeled electric vehicle 1, the electric motor 5 is driven by electric power supplied from the battery 6, and the rear wheel 4 is driven by the output of the electric motor 5. The electric motor 5 is accommodated in a power unit 47 which is disposed in the rightward of the rear wheel 4. Hereinafter, an overall construction of the two-wheeled electric vehicle 1 will be described sequentially from the front of a vehicle body.

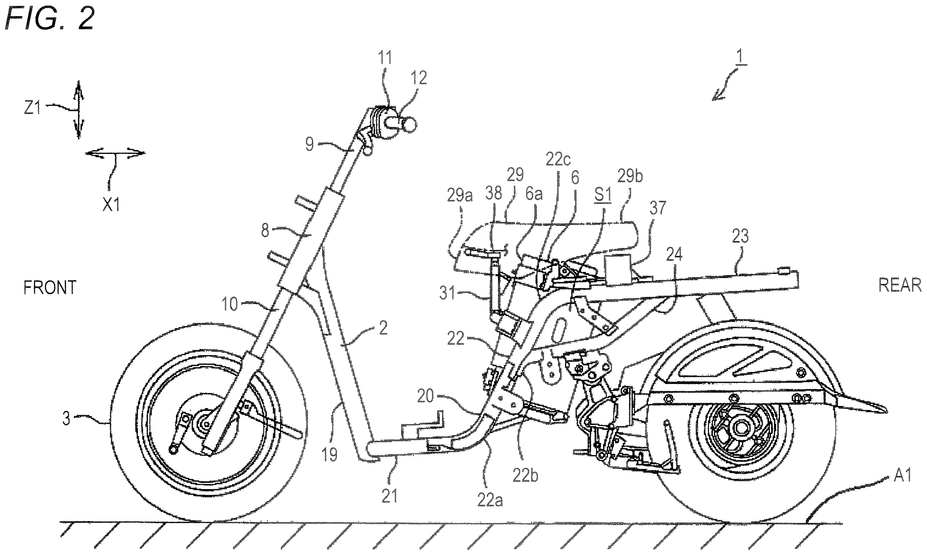

Fig. 2 is a left side view of the two-wheeled electric vehicle shown in Fig. 1 with some of constituent components removed therefrom. The two-wheeled electric vehicle 1 has a head pipe 8 which is disposed at a front upper portion of the two-wheeled electric vehicle 1. A steering shaft 9 is inserted rotatably in the head pipe 8. A front fork 10 having a pair of left and right fork legs is mounted at a lower end portion of the steering shaft 9. The front wheel 3 is attached to the front fork 10.

A handlebar 11 is mounted at an upper end portion of the steering shaft 9. The rider controls the handlebar 11 so as to turn the steering shaft 9, the front fork 10 and the front wheel 3 around an axis of the steering shaft 9.

Grips 12 are provided individually at both left and right end portions of the handlebar 11 (only a left grip is shown). A right grip constitutes a throttle grip. The rider turns the throttle grip so as to control the output of the electric motor 5.

As shown in Fig. 1, a meter 13 is provided in the vicinity of a center of the handlebar 11. A luggage rack 14 is disposed below the meter 13. The luggage rack 14 is fixed to the head pipe 8. The load of luggage placed on the luggage rack 14 acts mainly on the front wheel 3 via the head pipe 8 and the steering shaft 9. A headlamp 15 is fixed to a lower portion of the luggage rack 14.

As shown in Fig. 2, the two-wheeled electric vehicle 1 comprises a body frame 2 which extends rearwards from the head pipe 8. The body frame 2 is formed by using a steel pipe member or the like. The body frame 2 comprises a down tube 19 and a frame main body 20 which is disposed in rearward of the down tube 19. The down tube 19 extends obliquely downwards and rearwards from a lower portion of the head pipe 8. When seen from the side, the frame main body 20 extends rearwards from a lower end portion of the down tube 19, and a halfway portion of the frame main body 20 in relation to a front-to-rear direction X1 of the vehicle is formed into an S shape.

The frame main body 20 includes a pair of left and right frame main bodies. The frame main body 20 includes a first frame portion 21, a second frame portion 22, a third frame portion 23, and a fourth frame portion 24. The first frame portion 21 extends substantially straight and rearwards from the lower end portion of the down tube 19 and is slightly inclined obliquely upwards and rearwards.

The second frame portion 22 is formed into an S shape when seen from the side. The second frame portion 22 includes a lower end portion 22a, a middle portion 22b, and an upper end portion 22c. The lower end portion 22a of the second frame portion 22 is formed into a curved shape and is connected to a rear end portion of the first frame portion 21. The middle portion 22b of the second frame portion 22 extends obliquely upwards rearwards from the lower end portion 22a. When seen from the side, an inclination angle of the middle portion 22b in relation to the first frame portion 21 is, for example, 45 degrees or thereabout. The upper end portion 22c of the second frame portion 22 is formed into a curved shape and is connected to the middle portion 22b.

The third frame portion 23 extends rectilinearly from the upper end portion 22c and is slightly inclined obliquely upwards and rearwards. The fourth frame portion 24 extends rearwards from the middle portion 22b of the second frame portion 22, is curved obliquely upwards in a halfway position and is connected to a middle portion of the third frame portion 23.

As shown in Fig. 1, the two-wheeled electric vehicle 1 comprises the body cover 7 which is attached to the body frame 2. The body cover 7 comprises a front cover 25 which covers the head pipe 8, a lower cover 26 which extends downwards from a lower portion of the front cover 25, and a rear cover 27 which is disposed in rearward of the front cover 25.

The front cover 25 surrounds part of the steering shaft 9 and the head pipe 8 and also surrounds the down tube 19. The lower cover 26 extends rearwards from a lower portion 25a of the front cover 25 and covers the first frame portions 21 and the lower end portions 22a of the second frame portions 22 from the below, the left, and the right thereof. A foot rest portion 28 is disposed at an upper end portion of the lower cover 26. The foot rest portion 28 is provided so that the rider rests his or her feet thereon and is made substantially thin-flat.

The rear cover 27 is shaped, as a whole, so as to extend obliquely upwards and rearwards from a rear portion 26a of the lower cover 26. The rear cover 27 covers areas of the second frame portions 22 excluding the lower end portions 22a from the front, the left, and the right thereof. Additionally, the rear cover 27 covers the third frame portions 23 and the fourth frame portions 24 from the front, the left, and the right thereof.

A seat 29 is disposed above the rear cover 27. The feet of the rider sitting on the seat 29 rest on the foot rest portion 28 while the two-wheeled electric vehicle 1 is running. In the front-to-rear direction X1, the foot rest portion 28 is disposed between a rear face 25b of the front cover 25 and a front end portion 29a of the seat 29. Additionally, the seat 29 is disposed above the second frame portions 22, part of the third frame portions 23, and part of the fourth frame portions 24. A space surrounded by the seat 29 and the rear cover 27 defines an accommodation space S1.

As shown in Fig. 2, the seat 29 is supported by a first bracket 31 and a support bracket 37, constituting part of an external face of the vehicle body. The first bracket 31 is mounted at the middle portions 22b of the second frame portions 22. The first bracket 31 extends upwards from the middle portions 22b. A hinge portion 38 is provided at an upper end portion of the first bracket 31. The seat 29 is supported by the first bracket 31 via the hinge portion 38. The first bracket 31 supports the seat 29 from the below thereof. The seat 29 can pivot about the hinge portion 38. The accommodation space S1 can be opened upwards by causing the seat 29 to pivot about the hinge portion 38. It is noted that the hinge portion 38 may be omitted so that the seat 29 is fixed directly to the first bracket 31.

A rear portion 29b of the seat 29 is supported by the support bracket 37. The support bracket 37 is fixed to the third frame portions 23 of the body frame 2 and is shaped so as to project upwards from the third frame portions 23.

The battery 6, which is a power supply for the electric motor 5, is disposed below the seat 29. The battery 6 is disposed between the pair of left and right second frame portions 22. The battery 6 is a rechargeable secondary battery. When seen from the side, the battery 6 has a substantially rectangular shape in which a length (a height) in a vertical direction Z1 of the vehicle is longer than a length (a width) in the front-to-rear direction X1. The battery 6 is disposed in a posture in which the battery 6 is inclined obliquely rearwards with its front lying higher than its rear and is supported on the body frame 2. An upper portion 6a of the battery 6 is disposed between the first bracket 31 and the support bracket 37.

As shown in Fig. 1, a luggage rack 45 is disposed at the rear of the seat 29. The luggage rack 45 is disposed on the third frame portions 23 to be supported by the third frame portions 23. Luggage can be placed on the luggage rack 45. The load of the luggage placed on the luggage rack 45 is borne mainly by the rear wheel 4.

In this way, the luggage rack 14, the battery 6 which is heavy, and the luggage rack 45 are disposed so as to be aligned in the front-to-rear direction X1. Consequently, when luggage is placed on the luggage rack 14 and the luggage rack 45, the load of the two-wheeled electric vehicle 1 can be balanced evenly in the front-to-rear direction X1. Consequently, even with the luggage placed on the luggage rack 14 and the luggage rack 45, it is possible to maintain the high controllability of the two-wheeled electric vehicle 1.

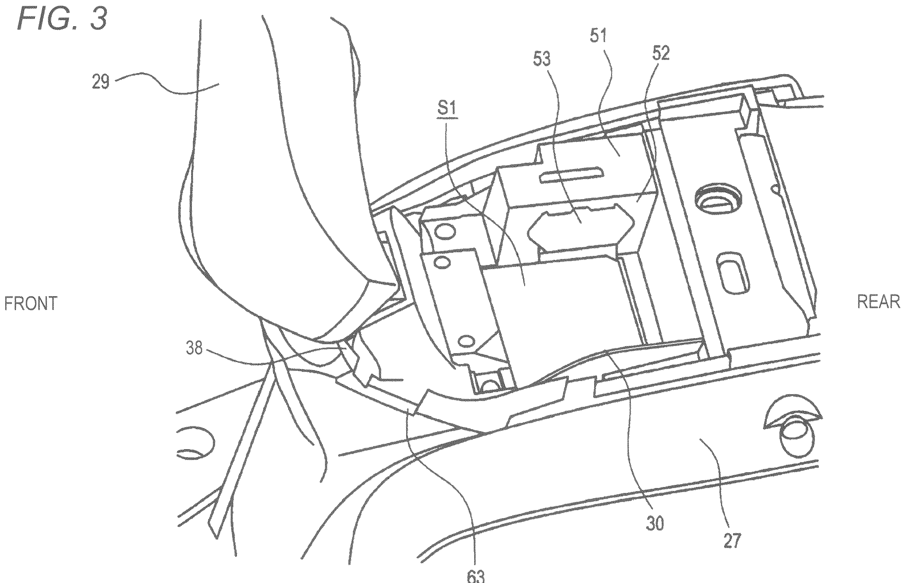

Fig. 3 is a perspective view showing an accommodation space S1 with a seat 29 opened. By causing the seat 29 to pivot upwards about a hinge portion 38, an opening portion 30 is revealed so that the accommodation space S1 is opened upwards. In addition, by causing the seat 29 to pivot about the hinge portion 38 in a reverse direction to the direction in which the seat 29 is opened to be closed, the opening portion 30 is closed. In this way, the seat 29 serves as a lid member which can close the accommodation space S1. Rainwater or dust is prevented from intruding into an interior of the accommodation space S1 as a result of the seat 29 closing the opening portion 30.

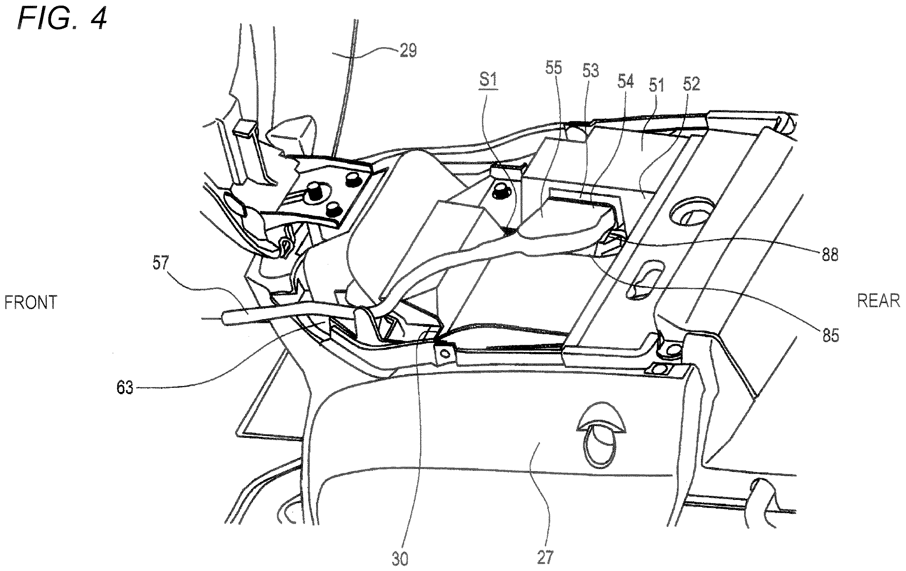

A connection box 51 is provided in an area closer to a right end of the accommodation space S1. A receptacle 53, which serves as a charge receptacle of the invention, is provided in a left side wall 52 of the connection box 51. The receptacle 53 is connected to a battery 6 so as to electrically communicate therewith. As shown in Fig. 4, a plug 55, which is a charge plug provided on a charge cord 57 which extends from a charger 58 (described later), is connected to the receptacle 53, whereby the battery 6 is charged.

The charge cord 57 is led out leftwards of the vehicle with the plug 55 connected to the receptacle 53. A cutout portion 63 is formed in a left front portion of an edge portion of the opening portion 30 of the accommodation space S1. The charge cord 57 is passed through the cutout portion 63 in the opening portion 30. With this configuration, the seat 29 can close the opening portion 30 in the accommodation space S1 with the charge cord 57 which connects the plug 55 with the charger 58 led into the interior of the accommodation space S1.

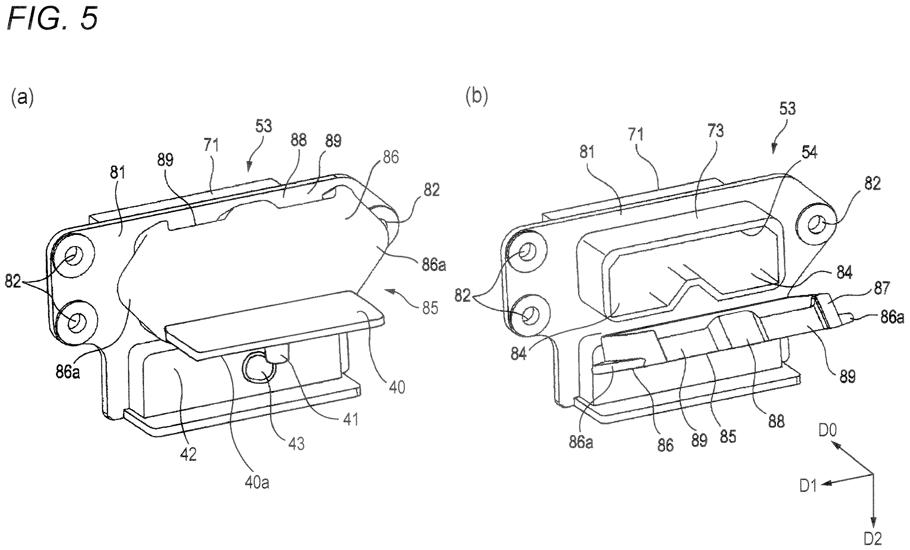

Fig. 5 shows an external appearance of the receptacle 53, wherein (a) shows a state in which a connection port 54 is closed, and (b) shows a state in which the connection port 54 is opened. The receptacle 53 includes a housing 71 which is formed from a synthetic resin or the like. A connection port 54 is formed in the housing 71, and a connecting portion 76 of the plug 55, which will be described later, can be fitted with the connection port 54.

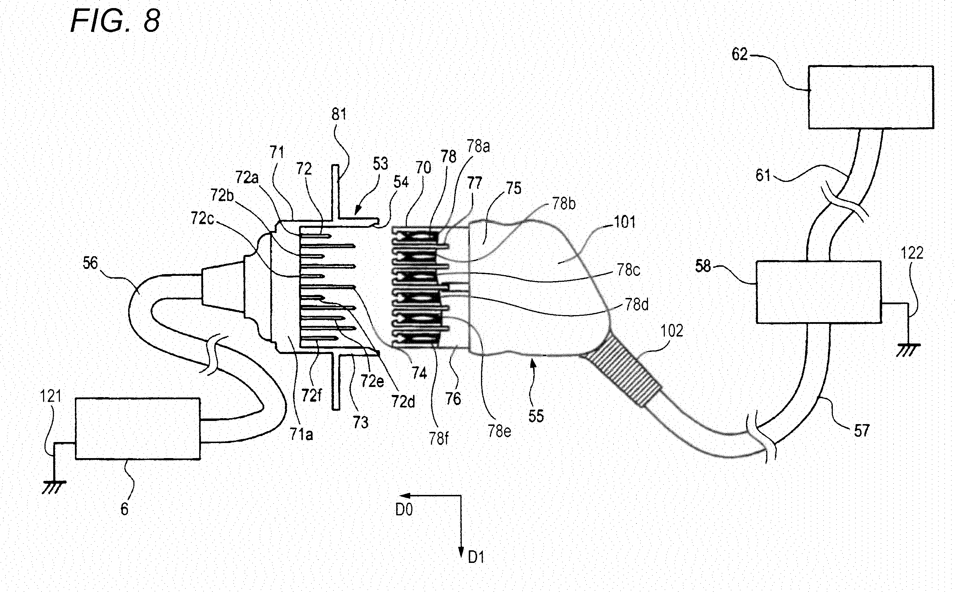

The connection port 54 is formed into a thin-flat shape as a whole. Specifically, the connection port 54 has an opening in which a dimension in a horizontal direction D1 which is perpendicular to an inserting direction D0 of the plug 55 is larger than a dimension in a vertical direction D2 which is perpendicular to the inserting direction and the horizontal direction. The housing 71 has a plurality of male terminals 72 in an interior of an outer circumferential wall 73 which defines the connection port 54 (see Fig. 8).

A flange portion 81, which projects to a circumference of the outer circumferential wall 73, is formed on the housing 71 of the receptacle 53. Mounting holes 82 are formed in both side portions of the flange portion 81. The housing 71 is fixed in place within the connection box 51 by screwing screw members (not shown) which are inserted through the mounting holes 82 into threaded holes (not shown) provided in a sheet metal member.

The housing 71 has a pair of guide grooves 84 in a lower portion of the outer circumferential wall 73 which defines the connection port 54. These guide grooves 84 are formed on a left- and right-hand sides of the housing 71 of the receptacle 53 in relation to a widthwise direction. These guide grooves 84 are formed along the inserting direction of the plug 55. Additionally, the receptacle 53 has a lid 85 which can close the connection port 54.

The lid 85 is formed from a synthetic resin or the like and has a thin-flat plate portion 86. The lid 85 has a circumferential wall 87 on a side of the thin-flat plate portion 86 which faces the connection port 54. The circumferential wall 87 extends along the outer circumferential wall 73 of the housing 71 of the receptacle 53 with the lid 85 closing the connection port 54 of the receptacle 53.

A lower end portion of the lid 85 is coupled to a pivot shaft so as to be pivotable about the pivot shaft. The pivot shaft is provided at a position below the connection port 54 in the housing 71 of the receptacle 53 so as to extend along a longitudinal direction of the connection port 54. Then, by causing the lid 85 to pivot about the pivot shaft, the connection port 54 of the receptacle 53 is opened or closed by the lid 85.

As shown at (a) in Fig. 5, a plate-shaped projection supporting portion 40 projects from a front face of the flat plate portion 86 of the lid 85 in a direction in which the plug 55 is disconnected (an opposite direction to the connecting direction D0). The projection supporting portion 40 is formed monolithically with the flat plate portion 86 and is enabled to follow the pivot movement of the lid 85. A projection 41 projects downwards from a lower face 40a of the projection supporting portion 40.

On the other hand, a lid open/close switch 42 is provided below the lid 85. This lid open/close switch 42 has a button portion 43. This button portion 43 is urged towards the accommodation space S1 by a spring or the like incorporated therein. The size and the position of projection 41 provided on the lid 85 are determined such that the lid 85 depresses the button portion 43 when the lid 85 is opened to a predetermined degree or more.

As shown at (b) in Fig. 5, an upper end portion of the lid 85 of the circumferential wall 87 is made into a claw portion (a dislocation preventive portion) 88. In addition, a pair of guide recess portions 89 are provided in both sides of the claw portion 88. Portions of the flat plate portion 86 of the lid 85 is caused to project sideways from the circumferential wall 87 to form a flange portion 86a.

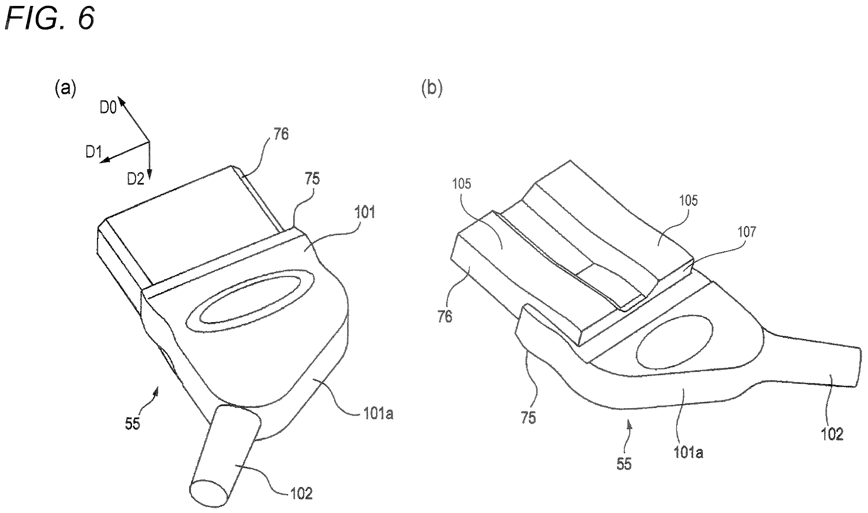

Fig. 6 shows an external appearance of the plug 55, wherein (a) shows an external appearance as seen from thereabove, and (b) shows an external appearance as seen from therebelow. The plug 55 includes a housing 75 which is formed from a synthetic resin or the like. The connecting portion 76 is provided on this housing 75 so as to be inserted into the connection port 54 of the receptacle 53. The connecting portion 76 has a plurality of terminal accommodation portions 70 (see Fig. 8).

Similarly to the connection port 54 of the receptacle 53, the connecting portion 76 of the plug 55 is also formed into a thin-flat portion. Namely, the connecting portion 76 is formed so that a dimension in a first direction D1 which is perpendicular to the inserting direction D0 of the plug 55 is larger than a dimension in a second direction D2 which is perpendicular to the plug inserting direction and the first direction.

The individual male terminals 72 are connected to corresponding female terminals 78 by inserting the connecting portion 76 of the plug 55 into the connection port 54 of the receptacle 53.

As shown at (a) in Fig. 6, the housing 75 of the plug 55 has a grip portion 101. The connecting portion 76 is provided at a front end portion of the grip portion 101. The grip portion 101 has a longer circumferential length that of the connecting portion 76.

A rear end face 101a of the grip portion 101 is inclined rearwards so as to gradually move away from the connecting portion 76 as it extends from a right end thereof to a left end thereof, and the left end of the rear end face 101a is disposed rearwards than the right end thereof. Consequently, the grip portion 101 has an asymmetrical shape relative to the left-to-right direction, which is a shape which facilitates the gripping of the plug 55 by the right hand of the operator.

When expressions of "front," "rear," "left," and "right" are used in the description made above, the expressions are used only as a matter of convenience in denoting the positional relationships in the housing 75, and hence, it is not required that the expressed directions coincide with front, rear, left and right directions of the vehicle. This will be true in a description which will be made below.

As shown at (b) in Fig. 6, a pair of elongated guide projections 105 are formed on a back face of the plug 55. The elongated guide projections 105 are formed over an overall length of the connecting portion 76 which includes part of the grip portion 101. The elongated guide projections 105 are formed on a left end and a right end of the plug 55 which correspond to a widthwise direction thereof. The elongated guide projections 105 are formed along the inserting direction in relation to the receptacle 53. The elongated guide projections 105 are slightly swollen at ends facing the grip portion 101 so that rear end faces 107 are formed.

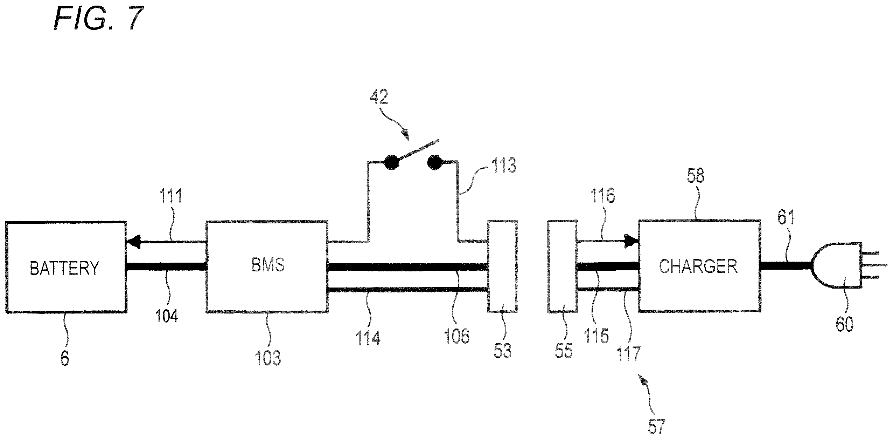

As shown in Fig. 7, the two-wheeled electric vehicle 1 includes a BMS (Battery Management System) 103.

The BMS 103 is connected with the battery 6 via an electric power supply line 104 and a communication line 111 and serves as an electrical communication controller which controls an electrical communication with the battery 6.

The BMS 103 and the receptacle 53 are connected together by a communication line 113. The lid open/close switch 42, which is operated by opening or closing the lid 85, is provided in a halfway position along the communication line 113.

The lid open/close switch 42 is brought to the turn-off state when the lid 85 is opened to a predetermined degree or more, and is brought to the turn-on state when the lid 85 is opened less than the predetermined degree. When the lid open/close switch 42 is brought to the turn-off state, a signal carried by the communication line 113 is interrupted. This disables the communication between the receptacle 53 and the BMS 103. On the other hand, when the lid open/close switch 42 is brought to the turn-on state, the transmission and reception of a signal through the communication line 113 is enabled. This enables a communication between the receptacle 53 and the BMS 103.

Namely, the lid open/close switch 42 serves as a signal changer of the invention and changes the state of a signal carried by the communication line 113 based on whether the lid 85 is opened or closed.

The charge cord 57 connected to the plug 55 has an electric power supply line 115, a communication line 116 and a connection detection line 117. The charge cord 57 is connected to the charger 58. A power supply cable 61 is connected to the charger 58. A plug 60, which can be connected to a power supply 62 (described later), is provided at an end portion of the power supply cable 61.

When the plug 55 is connected to the receptacle 53, the electric power supply lines 106, 115 are electrically connected with each other, whereby a charge path from the charger 58 to the battery 6 is formed. In addition, the communication lines 113, 116 are electrically connected with each other, whereby a communication path between the charger 58 and the BMS 103 is formed. Further, a connection detection line 114 is electrically connected with the connection detection line 117, whereby a circuitry is formed which can detect a connection of the plug 55 to the receptacle 53. The BMS 103 detects that the plug 55 is connected to the receptacle 53 by monitoring the voltage of the connection detection line 114.

When a communication with the charger 58 is established, the BMS 103 establishes an electrical communication between the receptacle 53 and the battery 6. Namely, the BMS 103 continues to interrupt the electrical communication between the battery 6 and the receptacle 53 as long as a communication cannot be established between the charger 58 and itself.

Fig. 8 shows schematically a wiring between the two-wheeled electric vehicle 1 and the charger 58. The receptacle 53 is connected to the battery 6 via a wiring 56. Additionally, the plug 55 which is connected to the receptacle 53 is connected to the charge cord 57. The charge cord 57 is connected to the charger 58. The power supply 62 is connected to the charger 58 via an electric wire 61. With this configuration, with the plug 55 connected to the receptacle 53, electric power from the power supply 62 is supplied to the battery 6 via the charger 58, whereby the battery 6 is charged.

The plurality of male terminals 72 which are provided in the receptacle 53 are supported in the housing 71 so as to extend from a proximal portion 71a of the housing 71 towards the connection port 54. These male terminals 72 are arrayed in a longitudinal direction (the first direction D1) of the thin-flat shape of the housing 71. Bulkhead portions 74 are formed in the housing 71 so as to insulate the male terminals 72 individually.

Specifically, the male terminals 72 include a positive terminal 72a, a first communication terminal 72b, a second communication terminal 72c, a connection detection terminal 72d, a ground terminal 72e, and a negative terminal 72f, which are disposed sequentially in that order from one end side of the housing 71 in the longitudinal direction thereof. Then, the first communication terminal 72b and the second communication terminal 72c, the connection detection terminal 72d, and the ground terminal 72e are disposed between the positive terminal 72a and the negative terminal 72f.

The positive terminal 72a and the negative terminal 72f are connected to a power supply line 106 of the battery 6 which is installed in the two-wheeled electric vehicle 1. The first communication terminal 72b and the second communication terminal 72c are connected to the communication line 113 which is used for signal transmission between the BMS 103 the charger 58. The BMS 103 is installed in the two-wheeled electric vehicle 1 as an electrical communication controller. The connection detection terminal 72d is connected to the connection detection line 114 which is used for detection of the insertion of the plug 55 into the connection port 54. The ground terminal 72e is connected to a ground line 121 of the two-wheeled electric vehicle 1.

The plurality of terminal accommodation portions 70 in the connecting portion 76 are arrayed in the longitudinal direction (that is, the first direction D1) of the thin-flat-shaped housing 75. Slits 77 are formed individually between the terminal accommodation portions 70 so that the bulkhead portions 74 which are formed in the housing 71 of the receptacle 53 can be inserted thereinto. The female terminals 78 are accommodated individually in the terminal accommodation portions 70. Namely, the plurality of female terminals 78 are arrayed in the longitudinal direction of the thin-flat shape in an interior of the connecting portion 76.

Specifically, the female terminals 78 include a positive terminal 78a, a first communication terminal 78b, a second communication terminal 78c, a connection detection terminal 78d, a ground terminal 78e, and a negative terminal 78f which are disposed sequentially in that order from one end side of the housing 75 in the longitudinal direction thereof. Then, the first communication terminal 78b, the second communication terminal 78c, the connection detection terminal 78d, and the ground terminal 78e are disposed between the positive terminal 78a and the negative terminal 78f.

The positive terminal 78a and the negative terminal 78f are connected to the power supply line 115 of the charger 58. The first communication terminal 78b and the second communication terminal 78c are connected to the communication line 116 which is used for signal transmission between the BMS 103 and the charger 58. The BMS 103 is installed in the two-wheeled electric vehicle 1 as the electrical communication controller. The connection detection terminal 78d is connected to the connection detection line 117 which is used for detection of the insertion of the plug 55 into the connection port 54. The ground terminal 78e is connected to a ground line 122 of the charger 58.

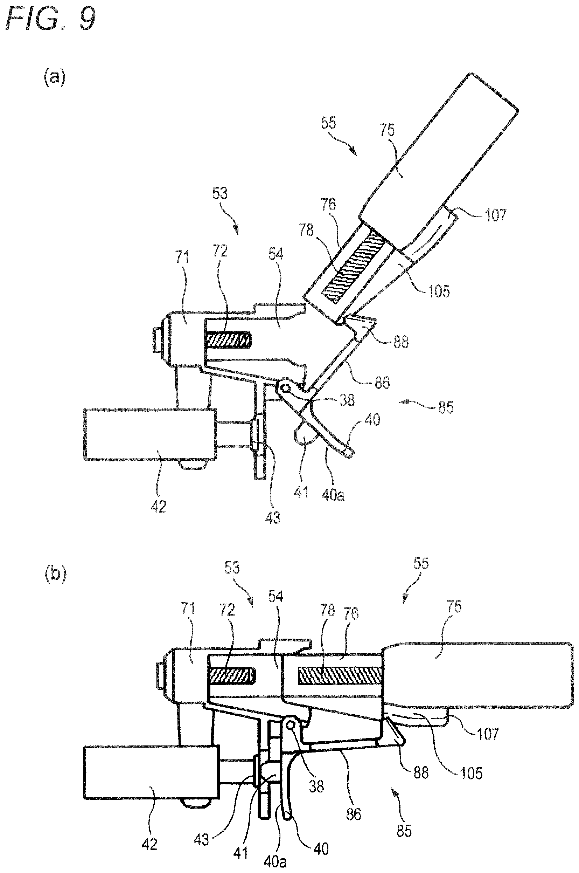

When charging the battery 6, firstly, as shown in Fig. 4, the seat 29 of the two-wheeled electric vehicle 1 is caused to pivot to open the accommodation space S1. Next, the operator who grips the plug 55 guides the plug 55 into the accommodation space S1 and brings a back face of the plug 55 into abutment with the claw portion 88 of the lid 85, as shown at (a) in Fig. 9. As this occurs, elongated guide projections 105 on the back face of the plug 55 fit in recess portions 89 of the claw portion 88, whereby the plug 55 is located in a correct position relative to the receptacle 53.

A coil spring, not shown, is installed in the pivot shaft 38 which supports the lid 85 pivotably, whereby an elastic force, which attempts to cause the lid 85 to pivot in a direction in which the connection port 54 is closed, is always applied.

When the plug 55 is pushed downwards against the elastic force of the coil spring from the state shown at (a) in Fig. 9, the lid 85 is caused to pivot to open the connection port 54. Then, the connecting portion 76 of the plug 55 faces the connection port of the receptacle 53. In addition, the projection 41 projecting from the lower face 40a of the projection supporting portion 40 is moved together with the pivot movement of the lid 85 and located at a position facing the button portion 43 of the lid open/close switch 42.

As shown at (b) in Fig. 9, when the connecting portion 76 of the plug 55 is inserted into the connection port 54 of the receptacle 53, as the inserting operation progresses, the thickness of the elongated guide projections 105 which are in abutment with the claw portion 88 of the lid 85 increases. Consequently, the lid 85 is caused to further pivot in the direction in which the lid 85 is opened via the claw portion 88.

When the lid 85 is opened to a predetermined degree, the projection 41 is pressed against the button portion 43, whereby the lid open/close switch 42 is brought to the turn-off state. When the lid open/close switch 42 is brought to the turn-off state, a communication between the receptacle 53 and the BMS 103 via the communication line 113 is disabled.

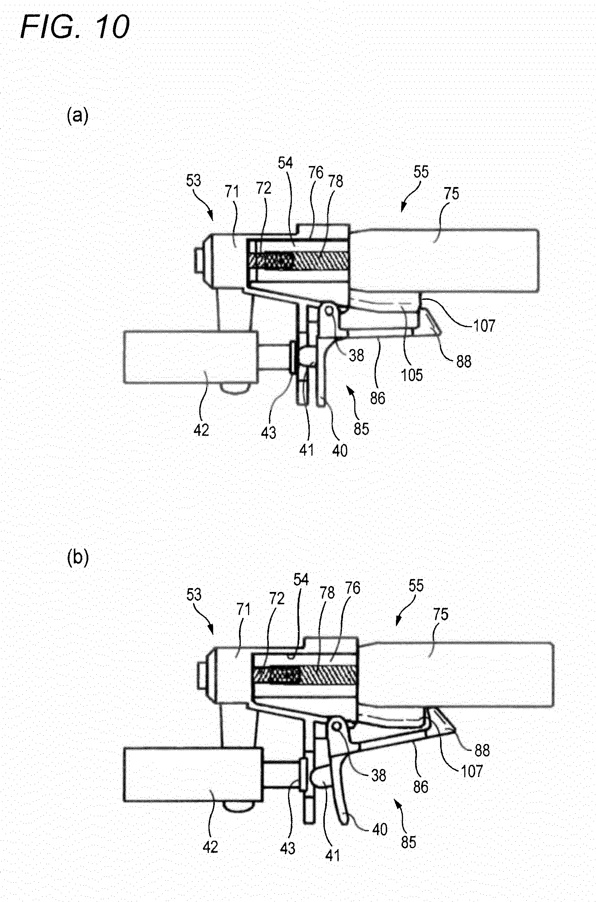

By pushing the connecting portion 76 of the plug 55 further into the connection port 54 of the receptacle 53, as shown at (a) in Fig. 10, the female terminals 78 of the plug 55 are brought into contact with the male terminals 72 of the receptacle 53. As this occurs, the claw portion 88 of the lid 85 is still in abutment with the elongated guide projections 105 of the plug 55, and the lid 85 has already been opened through the predetermined degree or more. Namely, the lid open/close switch 42 is kept in the turn-off state.

When the male terminals 72 and the female terminals 78 are connected together, the power supply line 106 on the side of the BMS 103 and the power supply line 115 on the side of the charger 58 are connected together, and the communication line 113 on the side of the BMS 103 and the communication line 116 on the side of the charger 58 are connected together. In addition, when the connection detection line 114 on the side of the BMS 103 and the connection detection line 117 on the side of the charger 58 are connected together, the BMS 103 detects that the plug 55 has been connected to the receptacle 53.

As this occurs, although the communication line 113 on the side of the BMS 103 and the communication line 116 on the side of the charger 58 are connected with each other, since the lid open/close switch 42 is kept in the turn-off state, the communication between the BMS 103 and the charger 58 is kept disabled. Consequently, the state is maintained in which the electrical communication between the receptacle 53 and the battery 6 is interrupted by the BMS 103. As a result of this, the generation of arc discharge is reliably prevented which would otherwise occur between the positive and negative terminals 72a, 72f which are electrical communication terminals connected to the power supply line 106 of the receptacle 53 and the positive and negative terminals 78a, 78f which are electrical communication terminals connected to the power supply line 115 of the plug 55.

As shown at (b) in Fig. 10, when the connecting portion 76 of the plug 55 reaches a complete fitting position in the connection port 54 of the receptacle 53, the abutment of the claw portion 88 of the lid 85 with the elongated guide projections 105 of the plug 55 is released, and the claw portion 88 engages with rear end faces 107 of the elongated guide projections 105. This causes the lid 85 to pivot in a direction in which the lid 85 is closed by virtue of the elastic force of the coil spring provided on the pivot shaft 38. Consequently, the depressed state of the button portion 43 by the projection 41 is released, whereby the lid open/close switch 42 is brought to the turn-on state.

As this occurs, the electrical communication is enabled between the BMS 103 and the charger 58 via the communication lines 113, 116 which are connected to each other. Then, the BMS 103 enables the electrical communication between the receptacle 53 and the battery 6. When the operator activates the charger 58, charging the battery 6 is started.

A large current flows to the positive terminal 78a and the negative terminal 78f which are connected to the power supply line during charging, which increases heat generated. In the plug 55 of this embodiment, the plurality of female terminals 78 are arrayed in the longitudinal direction of the thin-flat-shaped connecting portion 76. Further, the positive terminal 78a and the negative terminal 78f are spaced sufficiently apart from each other by the other female terminals 78 which are disposed therebetween. Consequently, heat generated in the positive terminal 78a and the negative terminal 78f is dissipated well at both the end portions of the housing 75. Consequently, the influence of heat generated during charging can be reduced as much as possible.

When the charging of the battery 6 is completed, the operator grips the grip portion 101 of the plug 55 and removes the plug 55 from the receptacle 53. As this occurs, the hand of the operator, by which the rear end portions of the elongated guide projections 105 of the plug 55 or the plug is gripped, is brought into contact with the claw portion 88 of the lid 85, whereby, as shown at (a) in Fig. 10, the engagement between the claw portion 88 and the rear end faces 107 of the elongated guide projections 105 is released so that the lid 85 is caused to pivot in the direction in which the lid 85 is opened.

As a result, the lid 85 is opened to the predetermined degree or more, whereby the projection 41 depresses the button portion 43, and the lid open/close switch 42 is brought to the turn-off state. This disables the communication between the BMS 103 and the charger 58. The BMS 103 thus determines that the communication with the charger 58 is being disabled, and interrupts the electrical communication between the receptacle 53 and the battery 6.

When the plug 55 is pulled out further from the receptacle 53, as shown at (b) in Fig. 9, the electrical communication between the male terminals 72 of the receptacle 53 and the female terminals 78 of the plug 55 is interrupted. Consequently, the power supply line 106 on the side of the BMS 103 is disconnected from the power supply line 115 on the side of the charger 58, and the communication line 113 on the side of the BMS 103 is disconnected from the communication line 116 on the side of the charger 58. Additionally, when the plug 55 is disconnected from the receptacle 53, the BMS 103 detects, based on the voltage of the connection detection line 114, that the plug 55 has been disconnected from the receptacle 53.

In this embodiment, since the electrical communication between the receptacle 53 and the battery 6 is interrupted before the connection of the male terminals 72 with the female terminals 78 is released, the generation of arc discharge is reliably prevented which would otherwise occur when the positive and negative terminals 71a, 72f which are connected to the power supply line 106 of the receptacle 53 and the positive and negative terminals 78a, 78f which are connected to the power supply line 115 of the plug 55 are disconnected from each other.

When the plug 55 is disconnected from the receptacle 53 completely, the connection port 54 of the receptacle 53 is closed by the lid 85. Thereafter, the plug 55 is removed from the accommodation space S1, and the seat 29 is caused to pivot to close the opening portion 30 of the accommodation space S1. Since rainwater or dust is prevented from intruding into the accommodation space S1 by the closure of the accommodation space S1 with the seat 29, the receptacle 53 is protected twofold by the seat 29 and the lid 85.

Thus, as has been described heretofore, in this embodiment, in connecting or disconnecting the plug 55 to or from the receptacle 53, the claw portion 88 of the lid 85 is provided in the position where part of the plug 55 or the hand of the operator who connects or disconnects the plug 55 is brought into contact therewith, so that the claw portion 88 serves as a contact portion of the invention. The contact portion changes the lid 85 into the open state or the closed state when contacted. The lid open/close switch 42 as a signal changer changes the state of a signal carried by the communication line 113 as a signal line based on whether the lid 42 is opened or closed. In addition, the BMS 103 as an electrical communication controller interrupts, in accordance with the state of the signal, the electrical communication between the receptacle 53 and the battery 6 before the connection between the electrical communication terminals 78a, 78f of the plug 55 and the electrical communication terminals 72a, 72f of the receptacle 53 is released.

Consequently, the generation of arc discharge can be reliably prevented which would otherwise occur when the plug 55 is connected to or disconnected from the receptacle 53. Additionally, even when the plug 55 is sufficiently downsized, it can realize the displacement of the lid 85 triggering the interruption of an electrical communication. Accordingly, it is also possible to reduce the size of the receptacle 53 which corresponds to the plug 55. Such a small receptacle is suitable for installation in the two-wheeled electric vehicle 1.

In addition, in this embodiment, the switching operation which triggers the interruption of the electrical communication is performed in such a state that the lid 85 is opened to the predetermined degree or more. Then, when the complete fitting state of the plug 55 with respect to the receptacle 53 is canceled, the claw portion 88 never fails to be brought into abutment with the elongated guide projections 105 of the plug 55 to bring the lid 85 to the state that the lid 85 is opened to the predetermined degree or more. Consequently, even though the plug 55 is unexpectedly disconnected during charging, the generation of arc discharge can be reliably prevented.

When the plug 55 is completely fitted in the receptacle 53 as shown at (b) in Fig. 10, the lid 85 could be operated by an unexpected application of an external force (collision of a foreign matter, tampering by a child or the like). However, in case the engagement of the claw portion 88 of the lid 85 with the rear end faces 107 of the elongated guide projections 105 is canceled by the external force so applied, the lid 85 never fails to be opened to the predetermined degree or more, whereby the lid open/close switch 42 is brought to the turn-off state. Consequently, it is possible to reliably prevent the generation of arc discharge against the disconnection of the plug 55 through the unexpected operation of the lid 85.

The embodiment that has been described heretofore is intended to facilitate the understanding of the invention and is not intended to limit the invention. It is obvious that the invention can be modified or improved without departing from the intent and purpose thereof and that their equivalents can be also included in the invention.

The electrical communication control performed by the BMS 103 does not require that the electrical communication between the receptacle 53 and the battery 6 be interrupted completely. A configuration may be adopted in which the voltage or current at the receptacle 53 is reduced to such an extent that the generation of arc discharge is prevented which would occur in association with the connection or disconnection of the plug 55.

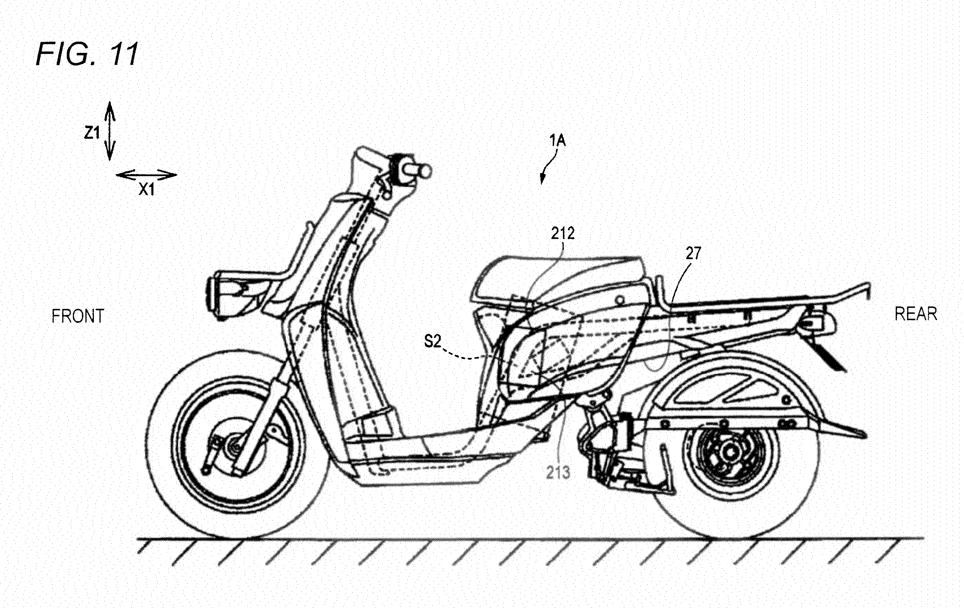

Where to dispose the receptacle 53 is not limited to the accommodation space S1 provided underneath the seat 29. For example, as in a two-wheeled electric vehicle 1A shown in Fig. 11, a configuration may be adopted in which a receptacle 53 is disposed in an accommodation space S2 which is provided on a left side of the vehicle in a rear cover 27. An opening portion 212 of this accommodation space S2 is opened sideward of the vehicle. A lid member 213 configured to open or close the opening portion 212 is provided on an outer wall of the accommodation space S2.

The function as the electrical communication control unit which controls the electrical communication between the receptacle 53 and the battery 6 does not necessarily have to be realized only by the BMS 103 alone. At least part of the function as the electrical communication control unit is allowed to be realized by at least either of a CCU 102 and an MCU 107 which are installed in the two-wheeled electric vehicle 1 so as to have a control function.

The function of the contact portion which changes the state that the lid 85 is opened or closed does not necessarily have to be realized by the claw portion 88 provided on the internal face of the lid 85. Any shape and location can be adopted for the contact portion as required as long as part of the plug 55 or the hand of the operator can be brought into contact with the adopted contact portion in disconnecting the plug 55 from the receptacle 53. For example, the flange portions 86a which are formed at both side portions of the flat portion 86 of the lid 85 can also realize the function of the contact portion.

The combination of the on/off state of the lid open/close switch 42 and the interrupted state of the communication line 113 is arbitrary. Namely, a configuration may be adopted in which a signal carried by the communication line 113 is interrupted when the lid open/close switch 42 is brought to the turn-on state.

The combination of the open/closed state of the lid 85 and the interrupted state of the communication line 113 is also arbitrary. Namely, a configuration may be adopted in which a signal is allowed to be carried by the communication line 113 in such a state that the lid 85 opens the opening portion of the connection port 54, and the BMS 103 interrupts the electrical communication between the receptacle 53 and the battery 6 based on the fact that the signal is carried by the signal line 113.

The communication line 113 does not necessarily have to be interrupted directly by the lid open/close switch 42. A configuration may be adopted in which the communication line 113 is interrupted by an appropriate circuitry element which is operated by a signal outputted from the lid open/close switch 42.

The function as the signal changer which changes the signaling state of the signal line 113 based on whether the lid 85 is opened or closed can also be realized by a position sensor which changes the signal according to whether the lid 85 is opened or closed.

The signal line whose signaling state is changed based on whether the lid 85 is opened or closed is not limited to the communication line 113. From the viewpoint of preventing arc discharge, any signal line other than the power supply line may suffice, and a configuration may be adopted in which the lid open/close switch 42 is provided in a halfway position along the length of the connection detection line 114.

The number of wheels of the straddle-type electric vehicle to which the invention is applied is not limited to two and hence can be determined as required.

## Claims

1. A straddle-type electric vehicle (1), comprising:
a charge receptacle (53) having:
a connection port (54) with which a charge plug (55) is fitted; and
an electrical communication terminal (72a, 72f) adapted to be connected with an electrical communication terminal (78a, 78f) of the charge plug (55);
a lid (85) configured to open or close the connection port (54);
a battery (6) connected to the electrical communication terminal (72a, 72f) so as to be able to establish electrical communication therewith;
an electrical communication controller (103) configured to control the electrical communication between the electrical communication terminal (72a, 72f) and the battery (6);
a signal line (113) connected to the electrical communication controller (103); and
a signal changer (42) configured to change a state of a signal carried by the signal line (113),
wherein the lid (85) is provided with a contact portion (88) configured to come in contact with, when the charge plug (55) fitted with the connection port (54) is removed therefrom, the charge plug (55) or a hand of an operator who removes the charge plug (55), whereby changing a state that the lid (85) is opened or closed;
**characterized in that**
the signal changer (42) is a switch provided with a button portion(43);
wherein a lid (85) comprises a projection (41) configured to be pressed against the button portion (43) when the lid (85) is opened to a predetermined degree or more;
wherein the switch (42) is configured to change the state of the signal carried by the signal line (113) when the button portion (43) is pressed by the projection (41);
wherein the electrical communication controller (103) is configured to interrupt or limit the electrical communication between the charge receptacle (53) and the battery (6) in accordance with the state of the signal; and wherein the contact portion (88) is configured to open the lid (85) to the predetermined degree or more before the connection between the electrical communication terminal (78a, 78f) of the charge plug (55) and the electrical communication terminal (72a, 72f) of the charge receptacle (53) is established or canceled.

2. The straddle-type electric vehicle (1) as set forth in claim 1, wherein the contact portion (88) is provided on an inner face of the lid (85) facing the connection port (54).

3. The straddle-type electric vehicle (1) as set forth in claim 2, wherein the lid (85) is configured to be pivotable relative to the connection port (54).

4. The straddle-type electric vehicle (1) as set forth in any one of claims 1 to 3, wherein the switch is configured to interrupt the signal carried by the signal line (113) when the lid (85) is opened to a predetermined degree or more.

5. The straddle-type electric vehicle (1) as set forth in any one of claims 1 to 3, wherein the switch is configured to interrupt the signal carried by the signal line (113) when the lid (85) is opened less than a predetermined degree.

6. The straddle-type electric vehicle (1) as set forth in any one of claims 1 to 3, wherein the signal changer is a position sensor configured to change the signal in accordance with a position of the lid (85) opening or closing the connection port (54).

7. The straddle-type electric vehicle as set forth in any one of claims 1 to 6, wherein the signal line is a communication line connecting the electrical communication controller and a control unit of a charger configured to supply power to the battery.

8. The straddle-type electric vehicle (1) as set forth in any one of claims 1 to 7, wherein the charge receptacle (53) is configured such that:
a dimension in a first direction, which is perpendicular to a connecting-disconnecting direction of the charge plug (55), is larger than a dimension in a second direction, which is perpendicular to the first direction and the connecting-disconnecting direction; and
a plurality of terminals (72a, 72b, 72c, 72d, 72e, 72f) are arrayed in the first direction.

## Patentansprüche

1. Spreizsitz-Elektrofahrzeug (1), das umfasst:
eine Lade-Buchse (53), die aufweist:
eine Verbindungsöffnung (54), mit der ein Lade-Stecker (55) in Passung gebracht wird; und
einen elektrischen Verbindungsanschluss (72a, 72f), der zum Verbinden mit einem elektrischen Verbindungsanschluss (78a, 78f) des Lade-Steckers (55) eingerichtet ist;
eine Klappe (85), die zum Öffnen oder Schließen der Verbindungsöffnung (54) ausgeführt ist;
eine Batterie (6), die mit dem elektrischen Verbindungsanschluss (72a, 72f) so verbunden ist, dass elektrische Verbindung damit hergestellt werden kann;
eine Einrichtung (103) zum Steuern elektrischer Verbindung, die zum Steuern der elektrischen Verbindung zwischen dem elektrischen Verbindungsanschluss (72a, 72f) und der Batterie (6) ausgeführt ist;
eine Signal-Leitung (113), die mit der Einrichtung (103) zum Steuern elektrischer Verbindung eingerichtet ist; sowie
eine Signal-Umschalteinrichtung (42), die zum Umschalten eines Status eines von der Signal-Leitung (113) geleiteten Signals ausgeführt ist,
wobei die Klappe (85) mit einem Kontakt-Abschnitt(88) versehen ist, der so ausgeführt ist, dass er, wenn der mit der Verbindungsöffnung (54) in Passung gebrachte Lade-Stecker (55) daraus entfernt wird, so dass ein Status dahingehend geändert wird, dass die Klappe (85) geöffnet oder geschlossen ist, mit dem Lade-Stecker (55) oder einer Hand einer Bedienungsperson in Kontakt kommt, die den Lade-Stecker (55) entfernt,
**dadurch gekennzeichnet, dass**
die Signal-Umschalteinrichtung (42) ein mit einem Knopf-Abschnitt (43) versehener Schalter ist;
wobei eine Klappe (85) einen Vorsprung (41) umfasst, der so ausgeführt ist, dass er an den Knopf-Abschnitt (43) gedrückt wird, wenn die Klappe (85) bis zu einem bestimmten Grad oder weiter geöffnet wird;
der Schalter (42) so ausgeführt ist, dass er den Status des von der Signal-Leitung (113) geleiteten Signals ändert, wenn der Knopf-Abschnitt (43) durch den Vorsprung (41) gedrückt wird;
und die Einrichtung (103) zum Steuern elektrischer Verbindung so ausgeführt ist, dass sie die elektrische Verbindung zwischen der Lade-Buchse (53) und der Batterie (6) entsprechend dem Status des Signals unterbricht oder begrenzt; und
der Kontakt-Abschnitt (88) so ausgeführt ist, dass er die Klappe (85) bis zur dem bestimmten Grad oder weiter öffnet, bevor die Verbindung zwischen dem elektrischen Verbindungsanschluss (78a, 78f) des Lade-Steckers (55) und dem elektrischen Verbindungsanschluss (72a, 72f) der Lade-Buchse hergestellt oder aufgehoben wird.

2. Spreizsitz-Elektrofahrzeug (1) nach Anspruch 1, wobei sich der Kontakt-Abschnitt (88) an einer Innenfläche der Klappe (85) befindet, die der Verbindungsöffnung (54) zugewandt ist.

3. Spreizsitz-Elektrofahrzeug (1) nach Anspruch 2, wobei die Klappe (85) so ausgeführt ist, dass sie relativ zur der Verbindungsöffnung (54) geschwenkt werden kann.

4. Spreizsitz-Elektrofahrzeug (1) nach einem der Ansprüche 1 bis 3, wobei der Schalter so ausgeführt ist, dass er das von der Signal-Leitung (113) geleitete Signal unterbricht, wenn die Klappe (85) bis zu einem bestimmten Grad oder weiter geöffnet wird.

5. Spreizsitz-Elektrofahrzeug (1) nach einem der Ansprüche 1 bis 3, wobei der Schalter so ausgeführt ist, dass er das von der Signal-Leitung (113) geleitete Signal unterbricht, wenn die Klappe (85) weniger als bis zu einem bestimmten Grad geöffnet wird.

6. Spreizsitz-Elektrofahrzeug (1) nach einem der Ansprüche 1 bis 3, wobei die Signal-Umschalteinrichtung ein Positions-Sensor ist, der so ausgeführt ist, dass er das Signal entsprechend einer Position der Klappe (85) ändert, die die Verbindungsöffnung (54) öffnet oder schließt.

7. Spreizsitz-Elektrofahrzeug nach einem der Ansprüche 1 bis 6, wobei die Signal-Leitung eine Verbindungs-Leitung ist, die die Einrichtung zum Steuern elektrischer Verbindung und eine Steuerungs-Einheit einer Ladeeinrichtung verbindet, die zum Zuführen von Strom zu der Batterie ausgeführt ist.

8. Spreizsitz-Elektrofahrzeug (1) nach einem der Ansprüche 1 bis 7, wobei die Lade-Buchse (53) so ausgeführt ist, dass:
eine Abmessung in einer ersten Richtung, die senkrecht zu einer Richtung zum Verbinden/Trennen des Lade-Steckers (55) ist, größer ist als eine Abmessung in einer zweiten Richtung, die senkrecht zu der ersten Richtung und der Richtung zum Verbinden/Trennen ist; und
eine Vielzahl von Anschlüssen (72a, 72b, 72c, 72d, 72e, 72f) in der ersten Richtung angeordnet sind.

## Revendications

1. Véhicule électrique de type à selle (1), comprenant :
un réceptacle de charge (53) présentant :
un port de connexion (54) équipé d'une prise de charge (55) ; et
une borne de communication électrique (72a, 72f) adaptée pour être connectée à une borne de communication électrique (78a, 78f) de la prise de charge (55) ;
un couvercle (85) configuré pour ouvrir ou fermer le port de connexion (54) ;
une batterie (6) connectée à la borne de communication électrique (72a, 72f) de sorte à pouvoir établir une communication électrique avec celle-ci ;
un contrôleur de communication électrique (103) configuré pour contrôler la communication électrique entre la borne de communication électrique (72a, 72f) et la batterie (6) ;
une ligne de signal (113) connectée au contrôleur de communication électrique (103) ; et
un changeur de signal (42) configuré pour changer un état d'un signal véhiculé par la ligne de signal (113),
dans lequel le couvercle (85) est pourvu d'une partie de contact (88) configurée pour entrer en contact avec, lorsque la prise de charge (55) installée dans le port de connexion (54) est retirée de celui-ci, la prise de charge (55) ou une main d'un opérateur qui retire la prise de charge (55), changeant ainsi un état ouvert ou fermé du couvercle (85) ;
**caractérisé en ce que**
le changeur de signal (42) est un commutateur pourvu d'une partie de bouton (43) ;
dans lequel un couvercle (85) comprend une projection (41) configurée pour être appuyée contre la partie de bouton (43) lorsque le couvercle (85) est ouvert selon un degré prédéterminé ou supérieur ;
dans lequel le commutateur (42) est configuré pour changer l'état du signal véhiculé par la ligne de signal (113) lorsque la projection (41) s'appuie sur la partie de bouton (43) ;
dans lequel le contrôleur de communication électrique (103) est configuré pour interrompre ou limiter la communication électrique entre le réceptacle de charge (53) et la batterie (6) conformément à l'état du signal ;
et dans lequel la partie de contact (88) est configurée pour ouvrir le couvercle (85) selon le degré prédéterminé ou supérieur avant que la connexion entre la borne de communication électrique (78a, 78f) de la prise de charge (55) et la borne de communication électrique (72a, 72f) du réceptacle de charge (53) ne soit établie ou annulée.

2. Le véhicule électrique de type à selle (1) tel que défini à la revendication 1, dans lequel la partie de contact (88) est installée sur une face interne du couvercle (85) tournée vers le port de connexion (54).

3. Le véhicule électrique de type à selle (1) tel que défini à la revendication 2, dans lequel le couvercle (85) est configuré pour pouvoir pivoter par rapport au port de connexion (54).

4. Le véhicule électrique de type à selle (1) tel que défini à l'une quelconque des revendications 1 à 3, dans lequel le commutateur est configuré pour interrompre le signal véhiculé par la ligne de signal (113) lorsque le couvercle (85) est ouvert selon un degré prédéterminé ou supérieur.

5. Le véhicule électrique de type à selle (1) tel que défini à l'une quelconque des revendications 1 à 3, dans lequel le commutateur est configuré pour interrompre le signal véhiculé par la ligne de signal (113) lorsque le couvercle (85) est ouvert de moins d'un degré prédéterminé.

6. Le véhicule électrique de type à selle (1) tel que défini à l'une quelconque des revendications 1 à 3, dans lequel le changeur de signal est un capteur de position configuré pour changer le signal conformément à une position du couvercle (85) ouvrant ou fermant le port de connexion (54).

7. Le véhicule électrique de type à selle tel que défini à l'une quelconque des revendications 1 à 6, dans lequel la ligne de signal est une ligne de communication connectant le contrôleur de communication électrique et une unité de contrôle d'un chargeur configuré pour fournir de l'électricité à la batterie.

8. Le véhicule électrique de type à selle (1) tel que défini à l'une quelconque des revendications 1 à 7, dans lequel le réceptacle de charge (53) est configuré de sorte que :
une dimension dans une première direction, qui est perpendiculaire à un direction de connexion-déconnexion de la prise de charge (55), est supérieure à une dimension dans une deuxième direction, qui est perpendiculaire à la première direction et la direction de connexion-déconnexion ; et
une pluralité de bornes (72a, 72b, 72c, 72d, 72e, 72f) sont déployées dans la première direction.
